# EUROPEAN PATENT APPLICATION

(11) **EP 4 832 360 A2**
(43) Date of publication of application: **28.10.2026**
(21) Application number: 26169222.2
(22) Date of filing: 30.03.2026
(51) Int. Cl.: H04B 1/713, H04B 1/7163, H04B 1/7136

(54) **FAST FREQUENCY HOPPING TECHNIQUE**

(30) Priority: 31.03.2025 US 202563780889 P
(71) Applicant: Gilat Satellite Networks, Ltd., 49130 Petah-Tikva (IL)
(72) Inventor: LEVITAS, Guy, 49130 Petah Tikva (IL); SHAER, Yaakov, 49130 Petah Tikva (IL); SHIRI, Yahav, 49130 Petah Tikva (IL); ALTER, Amir, 49130 Petah Tikva (IL)
(74) Representative: V.O.

(57) **Abstract**

In a communication system employing Frequency Hopping (FH), a transmitter may change a transmission frequency from one transmission burst to a next transmission burst according to a (pseudo random) pattern, and a receiver may change its tuning frequency according to the same pattern to receive the transmission bursts. Transmitters and/or receivers for a communication system employing FH are presented. The transmitters and/or the receivers may be configured to use a continuous waveform (over the burst transmissions). The transmitters and/or receivers may be configured to perform frequency hopping, for example, while maintaining any of symbol timing and carrier phase.

## Description

### CROSS-REFERENCE TO RELATED APPLICATIONS

This application claims the benefit of U.S. Provisional App. No. 63/780,889, titled "Fast Frequency Hopping Technique," and filed March 31, 2025. The above-referenced application is hereby incorporated by reference in its entirety.

### FIELD OF ART / TECHNICAL FIELD

Aspects of the disclosure pertain to the field of wireless communication.

### BACKGROUND

A communication system includes at least a transmitter and a receiver. In simple communication systems, the transmitter transmits a modulated carrier at a predefined frequency and symbol rate (bandwidth), and the receiver, after being provided the frequency and symbol rate of the modulated carrier, tunes to receive the modulated carrier. Such communication systems have several vulnerabilities, making them inadequate for secure operation:
a. The presence (activity) and the properties of the modulated carrier (frequency and bandwidth) are easily detectable, for example, by monitoring the applicable frequency band of the electromagnetic spectrum
b. Once the modulated carrier is detected, the information it carries (if not encrypted) could be intercepted, for example, by tuning a second receiver to receive the modulated carrier
c. Communication can be jammed, by transmitting an interfering signal at the same frequency range as that of the modulated carrier. The interference reduces the carrier (signal) to noise ratio, thus preventing the receiver from successfully demodulating and decoding the interfered modulated carrier.

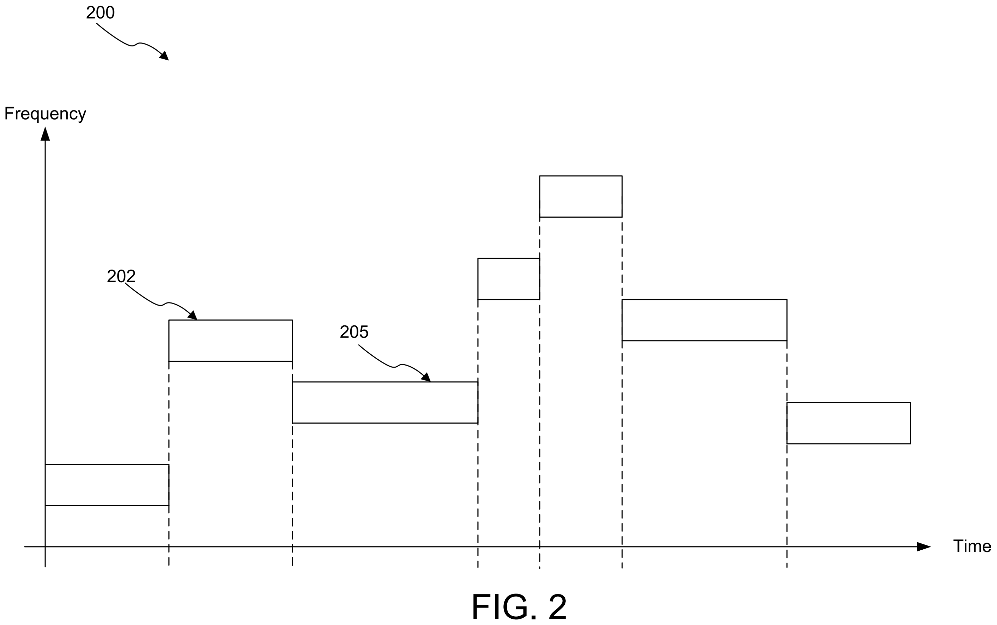

To overcome these vulnerabilities, communication systems designed for resilience often use spread-spectrum (SpSp) techniques. Frequency Hopping (FH) or Frequency Hopping Spread Spectrum (FHSS) is a known SpSp technique. In a communication system employing FH, the transmitter changes the frequency of a modulated carrier over a predefined frequency range (hopping bandwidth). The transmitter could change the frequency of the modulated carrier multiple times per second. The frequency change rate (hopping frequency) could start at few Hz, and perhaps exceed 10kHz (i.e., 10,000Hz). The predefined frequency range is larger than the bandwidth of the modulated carrier (channel bandwidth). The ratio between the hopping bandwidth and the channel bandwidth could range from an order of magnitude (e.g., x0) to 3 or 4 orders of magnitude (e.g., x00 to x000). Fig. 2 shows an example FH scheme 200, in which a center frequency of a modulated signal is modified (hopping) in a pseudo random manner. For example, the center frequency of transmission 205 is different from the center frequency of transmission 202. In another example, the duration of transmission 205 is different from the duration of transmission 202. For the communication system to fulfill its purpose (i.e., relaying information from the transmitter to the receiver), the receiver must follow the changes in transmission frequency in synchronization with the transmitter, i.e., both the transmitter and the receiver must generate the same pseudo random sequence of center frequencies and/or hop durations at about a same time.

To enable transmitting (e.g., sending) and/or receiving FH modulated signals, the transmitter and/or the receiver may use one or more burst transmission techniques. For example, the transmitter may add to each burst (hop) a known sequence of symbols (e.g., pilot symbols or unique word (UW)), to enable the receiver to (re)acquire timing and phase of the modulated carrier on burst-by-burst basis. In another example, a duration of a guard time between the end of a burst (hop) and a beginning of a subsequent burst (e.g., associated with a different center frequency) may be set based on a duration required for the transmitter and/or the receiver to change a transmission center frequency or a reception center frequency.

The higher the hopping frequency, the more secure the transmission may be. yet, the higher the hopping frequency, the shorter the interval between frequency changes (hop duration) and the duration of a transmission (burst) at a given frequency (dwell). Under such conditions, any function other than transferring data, that requires part of the hop duration, could significantly degrade the overall efficiency of the communication system (e.g., measured as the maximum data rate transferable over the communication system over a given hopping bandwidth). Such functions could include changing the transmission frequency and resynchronizing the receiver on the transmitter's timing and phase (e.g., by adding pilot symbols). For example, using two synthesizers could result in lower guard time between hops, but could also require adding pilot symbols to overcome the phase noncontinuity resulting from alternately using the two synthesizers.

Thus, fast FH (e.g., high hopping frequency) poses two challenges:
a. How to change the transmission frequency (and the receiver's tuner frequency) fast enough, for example, so that the frequency transition duration is significantly shorter than the shortest dwell time?
b. How can the receiver synchronize on the transmitter's timing and phase without the transmitter utilizing a significant portion of the dwell time for pilot symbols?

### BRIEF SUMMARY

The following presents a simplified summary in order to provide a basic understanding of some aspects of the disclosure. The summary is not an extensive overview of the disclosure. It is neither intended to identify key or critical elements of the disclosure nor to delineate the scope of the disclosure. The following summary merely presents some aspects of the disclosure in a simplified form as a prelude to the description below.

Aspects of the disclosure are directed to a transmitter. The transmitter may comprise a frequency up-converter configured to receive an input signal at a predefined frequency and a reference signal (e.g., a sine wave). The frequency up-converter may generate an output signal corresponding to the input signal. The output signal may be at a frequency corresponding to a frequency of the reference signal. The transmitter may further comprise a continuous waveform generator, a reference sine wave generator, and a frequency word generator. The transmitter may be further configured to generate the reference signal using the reference sine wave generator and the frequency word generator.

A continuous waveform generator may be configured to generate, based on symbol timing associated with the continuous waveform, a first synchronization signal and a second synchronization signal. The second synchronization signal may precede the first synchronization signal. The frequency word generator may be configured to generate a first frequency word corresponding to a first frequency associated with the reference signal (*f₁*)*.* The reference sine wave generator may be configured to receive the first frequency word and generate a sine wave (or a digitally sampled sine wave) corresponding to the reference signal in accordance with the first frequency (*f₁*)*.* The frequency word generator may be configured to receive the second synchronization signal and generate, at a time corresponding to the second synchronization signal, a second frequency word corresponding to a second frequency associated with the reference signal (*f₂*)*.* The second frequency (*f₂*) may be different from the first frequency (*f₁*)*.* The reference sine wave generator may be configured to receive both the second frequency word and the first synchronization signal (e.g., after receiving the second frequency word). The reference sine wave generator may time a modification of the sine wave (or a digitally sampled sine wave) corresponding to the reference signal in accordance with the second frequency (*f₂*) and further in accordance with the first synchronization signal. Modifying a frequency of the sine wave corresponding to the reference signal may comprise modifying the frequency of the sine wave without interrupting the reference signal and maintaining about a continuous phase of the reference signal.

Aspects of the disclosure are directed to a receiver. The receiver may comprise a frequency down-converter configured to receive an input signal (e.g., a wide band input signal) and a reference signal (e.g., a sine wave), and to generate an output signal. The output signal may correspond to a signal that may be present in the input signal. The output signal may be at a predefined frequency. The signal that may be present in the input signal may be at a frequency corresponding to a frequency of the reference signal. The receiver may further comprise a continuous waveform demodulator, a reference sine wave generator, and a frequency word generator. The receiver may be further configured to generate the reference signal using the reference sine wave generator and the frequency word generator.

The continuous waveform demodulator may be configured to generate, based on symbol timing associated with the continuous waveform, a first synchronization signal and a second synchronization signal. The second synchronization signal may precede the first synchronization signal. For example, synchronization signals generated by a continuous waveform demodulator may be similar to the synchronization signals generated by a continuous waveform generator of a transmitter previously described. Thus, generation of a reference signal in the receiver may be similar to generation of a reference signal in the transmitter.

### BRIEF DESCRIPTION OF THE DRAWINGS

Having thus described the disclosure in general terms, reference will now be made to the accompanying drawings, which are not necessarily drawn to scale, and wherein:
Fig. 1 shows an example communication system.
Fig. 2 shows a diagram of an example frequency hopping scheme.
Fig. 3 shows a block diagram of an example transmitter.
Fig. 4 shows a block diagram of an example transmitter.
Fig. 5 shows a block diagram of an example receiver.
Fig. 6 shows a block diagram of an example receiver.
Fig. 7 shows an example signal according to aspects of the disclosure.
Fig. 8 shows block diagrams of example modulator and demodulator.

### DETAILED DESCRIPTION

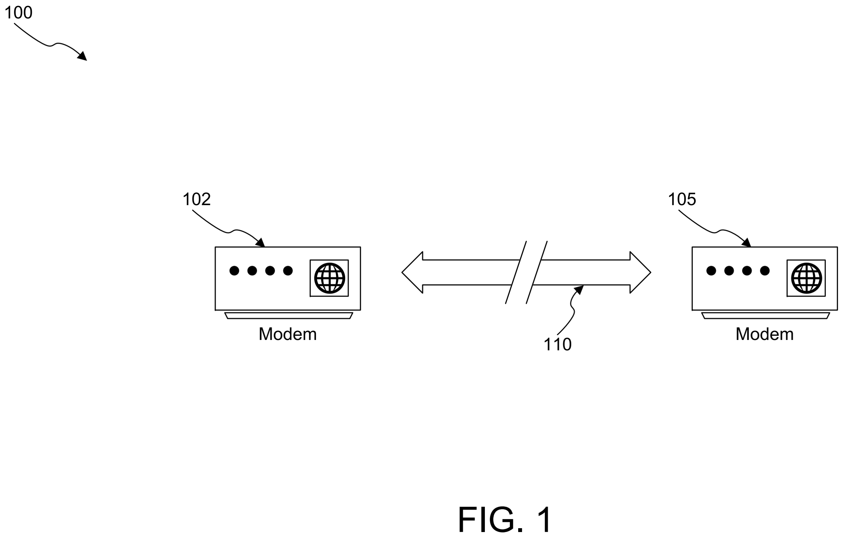

Fig. 1 shows an example communication system 100. The communication system 100 may comprise a first modem 102, a medium 110, and a second modem 105. The first modem 102 may be configured to transmit (e.g., send) information over the medium 110, and the second modem 105 may be configured to receive the information from the medium 110. The communication system 100 may be a wireless communication system. The transmitting (e.g., sending) from the first modem 102 and the receiving at the second modem 105 may include, for example, transmitting (e.g., sending) and receiving (respectively) electromagnetic waves. The electromagnetic waves may be modulated according to the information and/or according to a predefined waveform. The first modem 102 and/or the second modem 105 may be configured to at least transmit and/or receive modulated electromagnetic waves (e.g., modulated signals) in accordance with a frequency hopping (FH) technique.

The first modem 102 and/or the second modem 105 (described herein as 'the modems') may be configured to change, about instantaneously, a transmit frequency and/or a receive frequency. The modems may be configured to cause a change in a transmit frequency and/or in a receive frequency by changing a reference signal of a frequency up-converter (e.g., for transmitting) and/or a frequency down-converter (e.g., for receiving). The frequency up-converter (e.g., I/Q modulator) may be configured to receive an input signal at a predefined center frequency (e.g., baseband) and a reference signal, generate an output signal corresponding to the input signal, at a frequency corresponding to a frequency of the reference signal. The frequency up-converter may be configured to change a frequency of the output signal about instantaneously after a corresponding change in the frequency of the reference signal. The frequency down-converter (e.g., I/Q demodulator) may be configured to receive a reference signal and an input signal at a frequency corresponding to a frequency of the reference signal, and to generate an output signal corresponding to the input signal and at a predefined center frequency (e.g., baseband). The frequency down-converter may be configured to change a frequency of the input signal (e.g., to tune on an input signal at a different frequency) about instantaneously after a corresponding change in the frequency of the reference signal.

A source of a reference signal (e.g., a reference signal generator) may require time for completing a frequency transition after, or in response to, receiving a command to set (or to change) the frequency of the reference signal (e.g., for synthesizers, this required time may be denoted as settling time). The modems may be configured to generate the reference signal using a reference sine wave generator. A reference sine wave generator may comprise a numerically controlled oscillator (NCO). The reference sine wave generator may be configured to receive a frequency word corresponding to a frequency associated with the reference signal (e.g., *f*), and to generate a stream of samples corresponding to a sine wave at the corresponding frequency (e.g., f). The reference sine wave generator may be configured, after or in response to receiving a subsequent frequency word different from the frequency word, to modify, about instantaneously, the stream of samples to correspond to a sine wave at the corresponding subsequent frequency. As a reference sine wave generator may be associated with a very low settling time (e.g., no more than a duration of one sample of the stream of samples), the modems may be capable of about instantaneously changing the frequency of the reference signal.

For the modems to communicate, at least one modem (of the modems) may be configured to synchronize a receiver that may be included in the at least one modem. The synchronizing may comprise synchronizing on timing and phase associated with a transmitter that may be included in the other modem (of the modems). The modems may be configured to transmit and/or receive in accordance with a continuous waveform (e.g., rather than using a burst waveform). The continuous wave form may be used for at least the purpose of increasing or maximizing an efficiency of the communication system 100. In a continuous waveform, once a receiver has been synchronized on timing and phase associated with a transmitter, only a small number of pilots, if any, may be needed at predefined intervals (e.g., in accordance with the continuous waveform), for example, to keep the receiver synchronized with the transmitter and/or track small changes in timing and phase over time (e.g., as opposed to a fair amount of pilots that may be needed for acquiring synchronization for each hop, if a burst waveform is used). To use a continuous waveform over FH, symbol timing and/or carrier phase may need to be preserved across changes in signal (center) frequency.

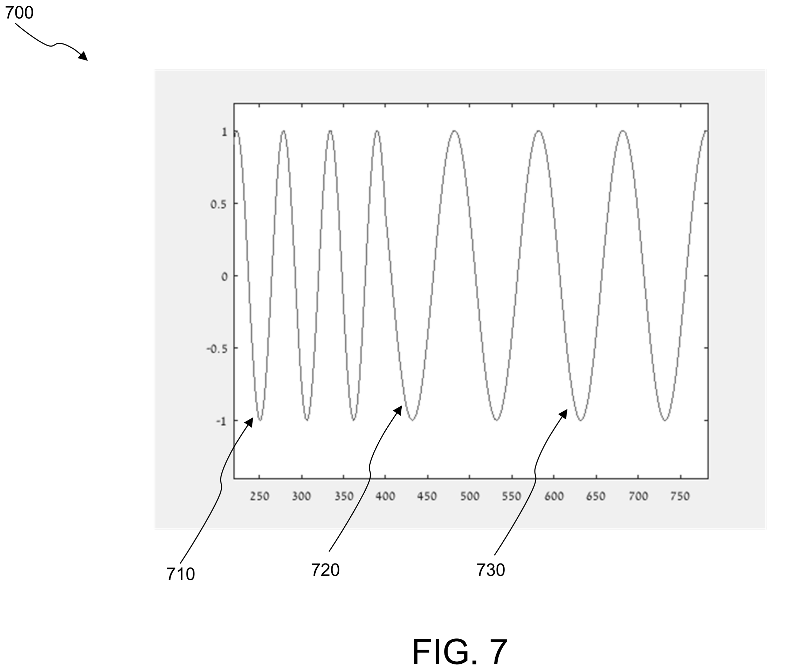

As described herein, the modems may be configured to change a transmit and/or receive frequency (e.g., hop) almost instantaneously. The modems may be configured to change a transmit and/or receive frequency, for example, by generating a reference signal using a reference sine wave generator. Referring to Fig. 7, a reference sine wave generator may be configured to receive a first frequency word corresponding to a first frequency *f₁* (710), to generate a stream of samples corresponding to a sine wave at the corresponding frequency *f₁,* receive a second frequency word corresponding to a second frequency *f₂* (730), and modify the stream of samples to correspond to a sine wave at frequency *f₂*. Modifying the stream of samples may cause modifying the frequency of the corresponding reference signal (e.g., from *f₁* to *f₂*) while maintaining about a continuous phase (720) of the reference signal. If both the receiver and the transmitter modify their reference signal frequency (e.g., from *f₁* to *f₂*)*,* at about the same time, a phase difference that may be introduced between the transmitter and the receiver following the change in reference signal frequency may be small. The phase difference may be small enough for a continuous waveform demodulator to overcome. Thus, a reference sine wave generator may be configured to receive at least one frequency word and a synchronization signal. The reference sine wave generator may be configured to time, using the synchronization signal, an application of the at least one frequency word to an NCO included in the reference sine wave generator. A transmitter and/or a receiver may each be configured to generate a synchronization signal for a reference sine wave generator included in the transmitter and/or in the receiver. The synchronization signal may be generated at predefined times associated with the continuous waveform. For example, the synchronization signal may be generated every (generation of) predefined number of symbols of the continuous waveform (e.g., at an exact symbol timing). In another example, the synchronization signal may be generated every (generation of) predefined number of frames associated with the continuous waveform (e.g., at an exact symbol timing corresponding to a start-of-frame (SOF) indication).

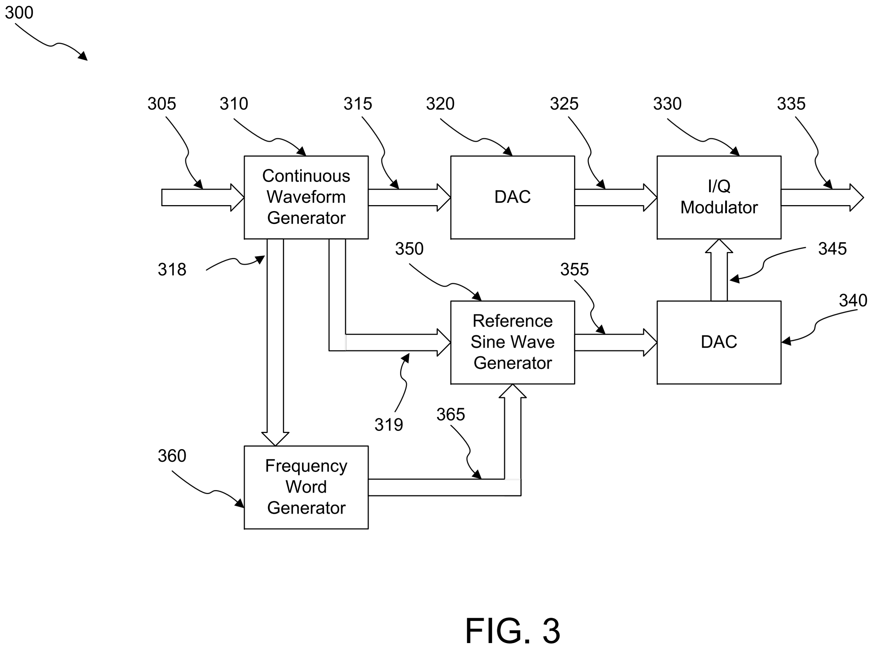

Fig. 3 shows a block diagram of an example transmitter. Transmitter 300 may be configured to transmit modulated signals in accordance with a FH technique. In general terms, the transmitter 300 may be configured to generate a baseband signal associated with a FH channel bandwidth, to up-convert the baseband signal to IF or RF using an analog I/Q modulator to produce a FH signal, and to transmit the FH signal. In some examples, the first modem 102 and/or the second modem 105 may comprise a transmitter 300.

Transmitter 300 may comprise, for example, a continuous waveform generator 310, a digital to analog converter (DAC) 320, and an I/Q modulator 330. In one example, the continuous waveform generator 310 may be associated with a continuous waveform corresponding to the 2^{nd} Generation Digital Video Broadcasting protocol for Satellite applications (DVB-S2, ETSI EN 302 307-1) or to the DVB-S2 Extensions (DVB-S2X, ETSI EN 302 307-2). The continuous waveform generator 310 may be configured to receive at least one stream of data 305. The at least one stream of data 305 may be bit oriented, byte oriented, and/or in accordance with any predefined format. The continuous waveform generator 310 may be configured, for example, to format the at least one stream of data 305 according to the continuous waveform and to generate a stream of sampled symbols 315. The stream of sampled symbols 315 may correspond to the at least one stream of data 305. The samples in the stream of sampled symbols 315 may be in the I/Q domain (e.g., each symbol may be represented by k complex samples represented in cartesian form, I and Q). The formatting of the at least one stream of data 305 may comprise any of (but not limited to) encoding for error correction, scrambling and interleaving (e.g., for energy dispersal), and adding structural symbols (e.g., framing symbols and/or pilot symbols). The continuous waveform generator 310 may be configured to filter the stream of symbols (e.g., using a square-root-raised-cosine (SRRC) filter), and interpolate the filtered stream of symbols to produce a stream of samples 315 (e.g., in the I/Q domain) corresponding to the filtered stream of symbols.

The DAC 320 may be configured to receive the stream of I/Q samples 315 and to generate an analog baseband signal 325 (e.g., an I signal and a Q signal) corresponding to the stream of I/Q samples 315. The I/Q modulator 330 may be configured to receive the analog baseband signal 325, receive a sine wave reference signal 345, and generate a real signal 335 at an intermediate frequency (IF) or at radio frequency (RF). The real signal 335 may correspond to the baseband signal 325, and a (center) frequency of the real signal 335 may correspond to a frequency of the reference signal 345. For example, IF may correspond to frequencies between 950MHz and 2450MHz.

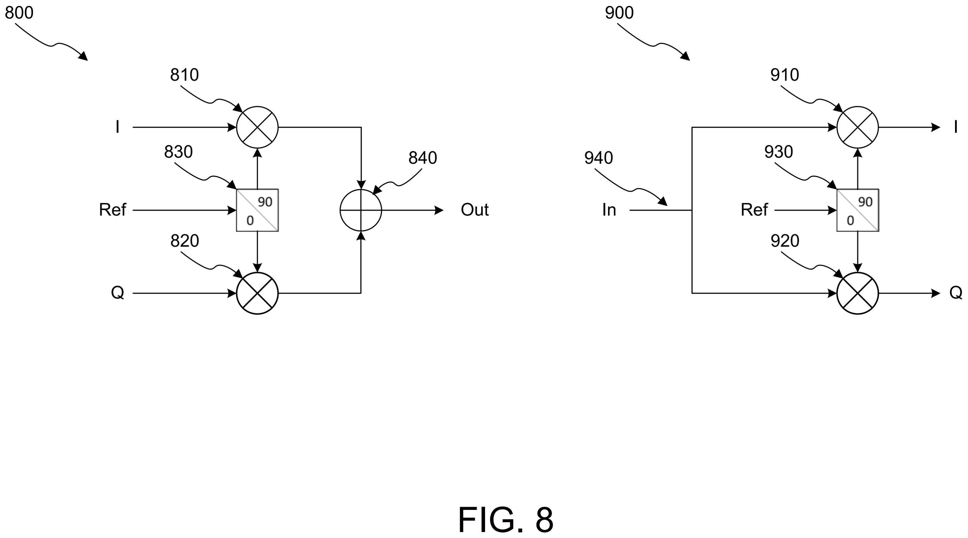

I/Q modulator 330 may correspond to an example I/Q modulator 800 as described herein in Fig. 8. I/Q modulator 800 may be configured to receive a baseband signal (I/Q) and a reference signal (Ref), and to output a real signal corresponding to the baseband signal. A center frequency of the real signal may correspond to a frequency of the reference signal. The I/Q modulator 800 may be configured to generate 830 two copies of the reference signal. The two copies of the reference signal may have a relative phase shift of about 90 degrees. For example, the two copies of the reference signal may comprise a first copy associated with a first phase (e.g., 0 degrees) and a second copy associated with a second phase, wherein the difference between the second phase and the first phase is about 90 degrees. The I/Q modulator 800 may be configured to mix 820 a first copy of the reference signal (e.g., 0 degrees) with a Q component of the baseband signal to generate a first up-converted signal, mix 810 a second copy of the reference signal (e.g., 90 degrees) with an I component of the baseband signal to generate a second up-converted signal, and output a sum 840 of the first up-converted signal and the second up-converted signal. The sum 840 of the first up-converted signal and the second up-converted signal may be a real signal associated with a center frequency corresponding to a frequency of the reference signal.

Returning to Fig. 3, transmitter 300 may be configured to transmit in accordance with a FH technique. The transmitter 300 may be configured to modify a frequency of a real signal 335 (e.g., a transmitted signal) in accordance with a (pseudo random) FH pattern, for example, by correspondingly modifying a frequency of a reference signal 345 provided to the I/Q modulator 330.

Transmitter 300 may comprise a frequency word generator 360, a reference sine wave generator 350, and a DAC 340. Transmitter 300 may comprise the frequency word generator 360, the reference sine wave generator 350, and the DAC 340, for example, for at least the purpose of generating and/or modifying a frequency of a reference signal 345. The frequency word generator 360 may be configured to generate frequency words 365, for example, in accordance with a (pseudo random) sequence associated with a FH scheme. The reference sine wave generator 350 may be configured to receive at least one frequency word of the frequency words 365, wherein the at least one frequency word may correspond to a frequency *f*. The reference sine wave generator 350 may be configured to digitally generate (e.g., using a NCO) a stream of digital samples 355 corresponding to a sine wave at frequency *f*. The DAC 340 may be configured to receive the digital samples 355 and to output a reference signal 345 (e.g., as a sine wave at frequency f). With reference to Fig. 7, the reference sine wave generator 350 may be configured to receive a first frequency word corresponding to a first frequency *f₁* (710), generate a stream of samples 355 corresponding to a sine wave at frequency *f₁,* receive a second frequency word corresponding to a second frequency *f₂* (730), and modify the stream of samples 355 to correspond to a sine wave at frequency *f₂*, wherein the modifying of the stream of samples 355 may modify a frequency of a reference signal 345 (e.g., from *f₁* to *f₂*) while maintaining a continuous phase (720) of the reference signal 345.

Reference sine wave generator 350 may be configured to receive a synchronization signal 319. The reference sine wave generator 350 may be configured to time, based on the synchronization signal 319, an application of a received frequency word 365, for example, in order to synchronize a modification of a stream of samples 355 to symbol timing. A continuous waveform generator 310 may be configured to generate a synchronization signal 319 in accordance with a symbol timing of predefined symbols associated with the continuous waveform. Applying a received frequency word 365 may comprise applying a frequency word corresponding to the received frequency word 365 to an NCO included in the reference sine wave generator 350. The frequency word generator 360 may be configured to generate frequency words 365 in synchronization with a continuous waveform (e.g., in accordance with a symbol timing). For example, the frequency word generator 360 may be configured to modify a frequency word 365 (e.g., from *f₁* to *f₂*) some time before a corresponding change in a frequency of a reference signal 345 is due, so that the reference sine wave generator 350 may apply the modified frequency word 365 when the synchronization signal 319 may be provided. At least to that end, the continuous waveform generator 310 may be configured to generate a second synchronization signal 318 (e.g., in accordance with symbol timing). The frequency word generator 360 may be configured to receive the second synchronization signal 318 and to modify frequency words 365 in accordance with the second synchronization signal 318.

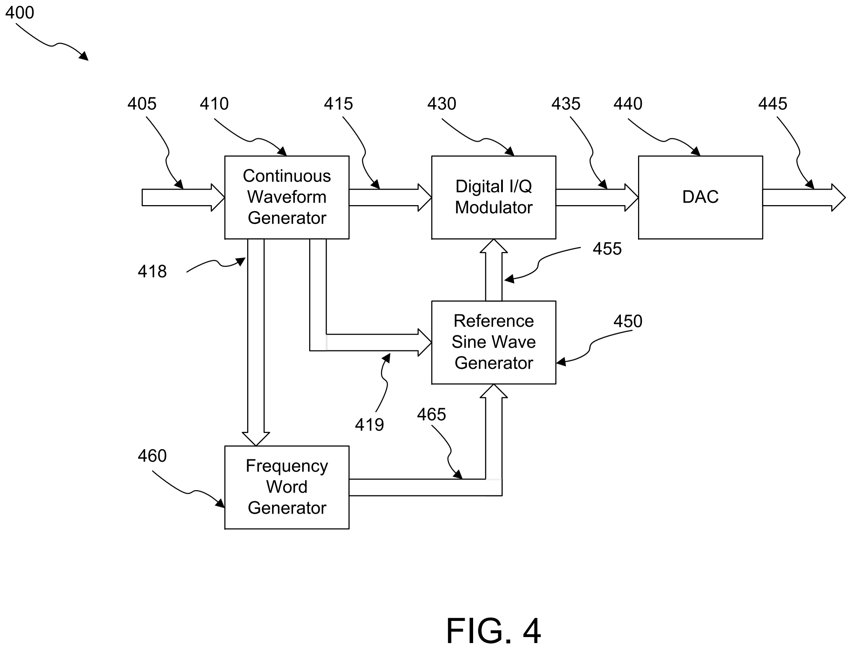

Fig. 4 shows a block diagram of an example transmitter. Transmitter 400 may be configured to transmit modulated signals in accordance with a FH technique. In general terms, the transmitter 400 may be configured to generate a digital I/Q signal corresponding to a FH signal at a designated frequency range (e.g., IF or RF), for example, in accordance with a hopping bandwidth and/or a channel bandwidth. The transmitter 400 may be configured to produce, based on the digital I/Q signal, the FH signal, and transmit the FH signal. In some examples, the first modem 102 and/or the second modem 105 may comprise a transmitter 400.

Transmitter 400 may comprise a continuous waveform generator 410, a digital I/Q modulator 430, and a DAC 440. In one example, the continuous waveform generator 410 may be associated with a continuous waveform corresponding to the 2^{nd} Generation Digital Video Broadcasting protocol for Satellite applications (DVB-S2, ETSI EN 302 307-1), or with the DVB-S2 Extensions (DVB-S2X, ETSI EN 302 307-2). The continuous waveform generator 410 may be configured to receive at least one stream of data 405. The at least one stream of data 405 may be bit oriented, byte oriented, and/or in accordance with any predefined format. The continuous waveform generator 410 may be configured to format the at least one stream of data 405 (e.g., according to the continuous waveform), and to generate a stream of sampled symbols 415 that may correspond to the at least one stream of data 405. The samples in the stream of sampled symbols 415 may be in the I/Q domain. The stream of sampled symbols 415 may correspond to a baseband signal. The continuous waveform generator 410 may be similar to the continuous waveform generator 310 or may comprise a continuous waveform generator 310. Hence, the continuous waveform generator 410 may be configured to format the at least one stream of data 405 and to generate a stream of sampled symbols 415 as previously described in reference to the continuous waveform generator 310.

Digital I/Q modulator 430 may be configured to receive a digitally sampled baseband signal (e.g., a stream of sampled symbols 415) and a digitally sampled reference sine wave signal 455, and to generate a digitally sampled real signal 435 corresponding to an IF or an RF. The digitally sampled real signal 435 may correspond to the stream of sampled symbols 415 and to a frequency associated with the reference signal 455. The DAC 440 may be configured to receive the digitally sampled real signal 435 and to generate an analog signal 445 corresponding to the digitally sampled real signal 435. In some examples, the analog signal 445 may be at IF between 950MHz and 2450MHz.

Transmitter 400 may be configured to transmit modulated signals in accordance with a FH technique. The transmitter 400 may be configured to modify a frequency of a real signal 445 (e.g., the transmitted signal) in accordance with a (pseudo random) FH pattern, for example, by correspondingly modifying a frequency associated with the digitally sampled reference (sine wave) signal 455 provided to the digital I/Q modulator 430.

For at least the purpose of generating and/or modifying a frequency associated with a digitally sampled reference signal 455, transmitter 400 may comprise a frequency word generator 460 and a reference sine wave generator 450. The frequency word generator 460 may be configured to generate frequency words 465, for example, in accordance with a (pseudo random) sequence associated with a FH scheme. The reference sine wave generator 450 may be configured to receive at least one frequency word of the frequency words 465, the at least one frequency word may correspond to a frequency *f*, and to digitally generate (e.g., using a NCO) a stream of digital samples corresponding to a sine wave at frequency *f*, for example, a digitally sampled reference signal 455. Referring to Fig. 7, the reference sine wave generator 450 may be configured to receive a first frequency word corresponding to a first frequency *f₁* (710), generate a digitally sampled reference signal 455 in accordance with the first frequency *f₁,* receive a second frequency word corresponding to a second frequency *f₂* (730), and/or modify the digitally sampled reference signal 455 in accordance with the second frequency *f₂*. The modifying of the digitally sampled reference signal 455 may modify a frequency associated with the digitally sampled reference signal 455 (e.g., from *f₁* to *f₂*) while maintaining a continuous phase (720) associated with the digitally sampled reference signal 455.

Reference sine wave generator 450 may be configured to receive a synchronization signal 419. The reference sine wave generator 450 may be configured to time, based on the synchronization signal 419, an application of a received frequency word 465, for example, in order to synchronize a modification of a digitally sampled reference signal 455 in accordance with a symbol timing. The continuous waveform generator 410 may be configured to generate a synchronization signal 419 in accordance with symbol timing of predefined symbols associated with the continuous waveform. Applying a received frequency word 465 may comprise applying a frequency word corresponding to the received frequency word 465 to an NCO included in the reference sine wave generator 450. The frequency word generator 460 may be configured to generate frequency words 465 in synchronization with the continuous waveform (e.g., in accordance with a symbol timing). For example, the frequency word generator 460 may be configured to modify a frequency word 465 (e.g., from *f₁* to *f₂*) at a time before a corresponding change in a frequency associated with a digitally sampled reference signal 455 is due, so that the reference sine wave generator 450 may apply the modified frequency word 465 if the synchronization signal 419 may be provided. At least to that end, the continuous waveform generator 410 may be configured to generate a second synchronization signal 418 (e.g., in accordance with symbol timing). The frequency word generator 460 may be configured to receive the second synchronization signal 418 and to modify frequency words 465 in accordance with the second synchronization signal 418.

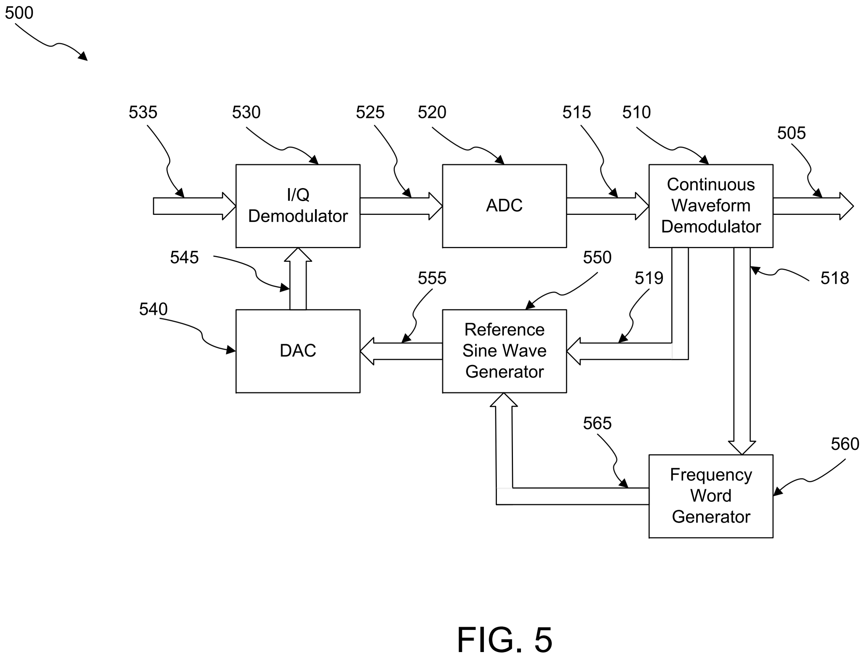

Fig. 5 shows a block diagram of an example receiver. Receiver 500 may be configured to receive modulated signals in accordance with a FH technique. In general terms, the receiver 500 may be configured to tune on an IF or RF channel corresponding to a FH channel bandwidth, to down-convert a signal (e.g., hop) that may be present in the channel to a baseband signal using an I/Q demodulator, sample the baseband signal, and/or to digitally process the sampled baseband signal to extract data carried in the signal. In some examples, a first modem 102 and/or a second modem 105 may comprise a receiver 500.

Receiver 500 may comprise an I/Q demodulator 530, an analog-to-digital converter (ADC) 520, and a continuous waveform demodulator 510. In one example, the continuous waveform demodulator 510 may be associated with a continuous waveform corresponding to the 2^{nd} Generation Digital Video Broadcasting protocol for Satellite applications (DVB-S2, ETSI EN 302 307-1), or to the DVB-S2 Extensions (DVB-S2X, ETSI EN 302 307-2).

I/Q demodulator 530 may be configured to receive an analog signal 535 (e.g., in RF or in IF). The analog signal 535 may comprise a FH analog signal associated with a FH channel bandwidth. The I/Q demodulator 530 may be configured to receive a reference (e.g., sine wave) signal 545. A frequency of the reference signal 545 may change in accordance with a frequency of (e.g., a hop of) the FH analog signal. The I/Q demodulator 530 may be configured to down-convert and/or filter (e.g., to prevent aliasing) a signal (e.g., a hop) that may be present in the analog signal 535, at a frequency corresponding to a frequency of the reference signal 545, to generate an I/Q baseband signal 525 that may correspond to the signal. A bandwidth associated with the I/Q baseband signal 525 may correspond to a channel bandwidth associated with the FH analog signal.

I/Q demodulator 530 may comprise an example I/Q demodulator 900, as shown in Fig. 8. I/Q Demodulator 530 may further comprise two filters, the first filter may be coupled to a first output of the I/Q demodulator 900 that may correspond to a Q component of a baseband signal, and the second filter may be coupled to a second output of the I/Q demodulator 900 that may correspond to an I component of the baseband signal. I/Q demodulator 900 may be configured to receive a real analog signal 940 and a reference signal (Ref). I/Q demodulator 900 may be configured to generate 930 two copies of the reference signal. The two copies of the reference signal may have a relative phase shift of about 90 degrees. For example, the two copies of the reference signal may comprise a first copy associated with a first phase (e.g., 0 degrees) and a second copy associated with a second phase, wherein the difference between the second phase and the first phase may be about 90 degrees. I/Q demodulator 900 may be configured to generate a baseband signal corresponding to the analog signal 940. The I/Q demodulator 900 may be configured to generate two about identical copies of the analog signal 940, to mix 920 a first copy of the reference signal (e.g., 0 degrees) with a first copy of the two copies of the analog signal 940 to produce a first output that may correspond to a Q component of a baseband signal, and/or mix 910 a second copy of the reference signal (e.g., 90 degrees) with a second copy of the two copies of the analog signal 940 to produce a second output that may correspond to an I component of the baseband signal.

Returning to Fig. 5, ADC 520 may be configured to receive an I/Q baseband signal 525 and to generate a corresponding digitally sampled I/Q baseband signal 515. The continuous waveform demodulator 510 may be configured to receive and decimate the digitally sampled I/Q baseband signal 515 to produce a decimated signal. The decimated signal may be passed through a match filter (e.g., a square-root-raised-cosine (SRRC) match filter) to produce a matched signal. The continuous waveform demodulator 510 may be configured to recover any of a phase, a frequency, and/or timing corresponding to the digitally sampled I/Q baseband signal 515 for example, based on the matched signal. The continuous waveform demodulator 510 may be configured to perform equalization, to produce an equalized signal, and to channel-decode the equalized signal, to produce an output data stream 505, for example, based on the matched signal.

Receiver 500 may be configured to receive a FH transmission. The receiver 500 may be configured to modify a frequency of a reference signal 545 in accordance with a (pseudo random) FH pattern, for example, for the purpose of tuning an I/Q demodulator 530 to a FH analog signal included in the analog signal 535 (e.g., as a frequency of the FH analog signal changes). The receiver 500 may comprise a frequency word generator 560, a reference sine wave generator 550, and a DAC 540, for example, for the purpose of generating and/or modifying a frequency of a reference signal 545. The frequency word generator 560 may be configured to generate frequency words 565, for example, in accordance with a (pseudo random) sequence associated with a FH scheme. The reference sine wave generator 550 may be configured to receive at least one frequency word, of the frequency words 565, corresponding to a frequency *f*, and to digitally generate (e.g., using a NCO) a stream of digital samples 555 corresponding to a sine wave at the frequency *f*. The DAC 540 may be configured to receive the digital samples 555 and to output a reference signal 545 (e.g., as a sine wave at frequency *f*). Referring to Fig. 7, the reference sine wave generator 550 may be configured to receive a first frequency word corresponding to a first frequency *f₁* (710), generate a stream of samples 555 corresponding to a sine wave at frequency *f₁,* receive a second frequency word corresponding to a second frequency *f₂* (730), and modify the stream of samples 555 to correspond to a sine wave at frequency *f₂*, wherein modifying the stream of samples 555 may cause a modification of the frequency of a reference signal 545 (e.g., from *f₁* to *f₂*) while maintaining a continuous phase (720) of the reference signal 545.

Reference sine wave generator 550 may be configured to receive a synchronization signal 519. The reference sine wave generator 550 may be configured to time, based on the synchronization signal 519, an application of a received frequency word 565, for example, in order to synchronize a modification of a stream of samples 555 to symbol timing. The continuous waveform generator 510 may be configured to generate a synchronization signal 519 in accordance with symbol timing of predefined symbols associated with the continuous waveform. Applying a received frequency word 565 may comprise applying a frequency word corresponding to the received frequency word 565 to an NCO included in the reference sine wave generator 550. The frequency word generator 560 may be configured to generate frequency words 565 in synchronization with a continuous waveform (e.g., in accordance with a symbol timing). For example, the frequency word generator 560 may be configured to modify a frequency word 565 (e.g., from *f₁* to *f₂*) some time before a corresponding change in a frequency of a reference signal 545 may be due, so that the reference sine wave generator 550 may apply the modified frequency word 565 when the synchronization signal 519 may be provided. The continuous waveform generator 510 may be configured to generate a second synchronization signal 518 (e.g., in accordance with symbol timing). The frequency word generator 560 may be configured to receive a second synchronization signal 518 and to modify frequency words 565 in accordance with the second synchronization signal 518.

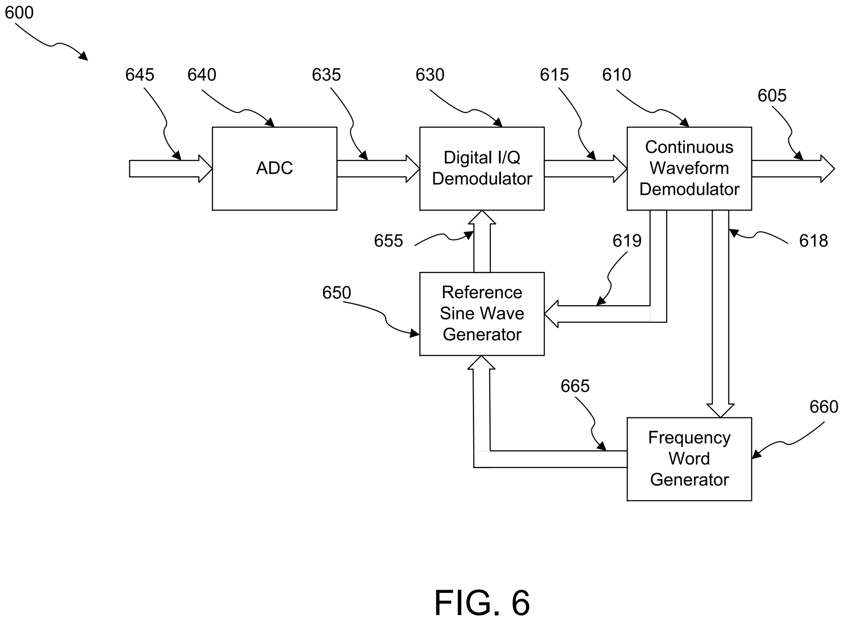

Fig. 6 shows a block diagram of an example receiver. Receiver 600 may be configured to receive a signal modulated in accordance with a FH technique (e.g., a FH signal). The FH signal may be associated with a hopping bandwidth and/or with a channel bandwidth. The receiver 600 may be configured to generate a digital signal corresponding to a hopping bandwidth (e.g., a hopping bandwidth corresponding to the FH signal), digitally tune on a channel included in the hopping bandwidth (e.g., in accordance with the FH signal and/or with the channel bandwidth), down-convert a signal (e.g., hop) that may be present in the channel to produce a digitally sampled baseband signal corresponding to the signal, and/or extract data carried in the signal. In some examples, the first modem 102 and/or the second modem 105 may comprise a receiver 600. The receiver 600 may comprise an ADC 640, a digital I/Q demodulator 630, and/or a continuous waveform demodulator 610. In one example, the continuous waveform demodulator 610 may be associated with a continuous waveform corresponding to the 2^{nd} Generation Digital Video Broadcasting protocol for Satellite applications (DVB-S2, ETSI EN 302 307-1), or to the DVB-S2 Extensions (DVB-S2X, ETSI EN 302 307-2).

ADC 640 may be configured to receive an analog signal 645 (e.g., in RF or in IF). The analog signal 645 may comprise a FH analog signal associated with a hopping bandwidth. The ADC 640 may be configured to generate a digitally sampled signal 635 corresponding to the analog signal 645 (e.g., comprising a digitally sampled signal corresponding to the FH analog signal). The digital I/Q demodulator 630 may be configured to receive the digitally sampled signal 635 and a digitally sampled reference (e.g., sine wave) signal 655. A frequency associated with the digitally sampled reference signal 655 may change in accordance with a frequency of (e.g., a hop of) the FH analog signal. The digital I/Q demodulator 630 may be configured to down-convert and/or filter (e.g., to prevent aliasing) a signal (e.g., a hop) included in the digitally sampled signal 635 to generate a digitally sampled I/Q baseband signal 615. A bandwidth associated with the digitally sampled I/Q baseband signal 615 may correspond to a channel bandwidth associated with the FH analog signal. The continuous waveform demodulator 610 may be similar to the continuous waveform demodulator 510 of receiver 500 or may comprise a continuous waveform demodulator 500. Thus, the continuous waveform demodulator 610 may be configured to receive the digitally sampled I/Q baseband signal 615 and to produce an output data stream 605 as previously described with reference to the continuous waveform demodulator 510.

Receiver 600 may be configured to receive a FH transmission. The receiver 600 may be configured to modify a frequency associated with a digitally sampled reference signal 655 in accordance with a (pseudo random) FH pattern, for at least the purpose of tuning a digital I/Q demodulator 630 to a FH signal included in the digitally sampled signal 635 (e.g., as a frequency of the FH signal changes). The receiver 600 may comprise a frequency word generator 660 and a reference sine wave generator 650, for example, for generating and/or modifying a frequency associated with the digitally sampled reference signal 655. The frequency word generator 660 may be configured to generate frequency words 665, for example, in accordance with a (pseudo random) sequence associated with a FH scheme. The reference sine wave generator 650 may be configured to receive at least one frequency word of the frequency words 665 and/or to digitally generate (e.g., using an NCO) a stream of digital samples corresponding to a sine wave at frequency *f* (e.g., the digitally sampled reference signal 655). The at least one frequency word may correspond to a frequency *f*. Referring to Fig. 7, the reference sine wave generator 650 may be configured to receive a first frequency word corresponding to a first frequency *f₁* (710), generate a digitally sampled reference signal 655 in accordance with the first frequency *f₁,* receive a second frequency word corresponding to a second frequency *f₂* (730), and/or modify the digitally sampled reference signal 655 in accordance with the second frequency *f₂*, wherein the modifying of the digitally sampled reference signal 655 may cause modifying a frequency associated with the digitally sampled reference signal 655 (e.g., from *f₁* to *f₂*) while maintaining a continuous phase (720) associated with the digitally sampled reference signal 655.

Returning to Fig. 6, reference sine wave generator 650 may be configured to receive a synchronization signal 619 and time, using the synchronization signal 619, an application of a received frequency word 665, for example, to synchronize a modification of the digitally sampled reference signal 655 to symbol timing. The continuous waveform generator 610 may be configured to generate a synchronization signal 619 in accordance with symbol timing of predefined symbols associated with the continuous waveform.

Applying a received frequency word 665 may comprise applying a frequency word corresponding to the received frequency word 665 to an NCO included in the reference sine wave generator 650. The frequency word generator 660 may be configured to generate the frequency words 665 in synchronization with a continuous waveform (e.g., in accordance with a symbol timing). For example, the frequency word generator 660 may be configured to modify a frequency word 665 (e.g., from *f₁* to *f₂*) at a time before a corresponding change in a frequency associated with a digitally sampled reference signal 655 is due, so that the reference sine wave generator 650 may apply the modified frequency word 665 when the synchronization signal 619 may be provided. The continuous waveform generator 610 may be configured to generate a second synchronization signal 618 (e.g., in accordance with symbol timing). The frequency word generator 660 may be configured to receive the second synchronization signal 618 and to modify frequency words 665 in accordance with the second synchronization signal 618.

Various aspects of the disclosure may be embodied as one or more methods, systems, apparatuses (e.g., components of a satellite communication network), and/or computer program products. Accordingly, those aspects may take the form of an entirely hardware embodiment, an entirely software embodiment, an entirely firmware embodiment, or an embodiment combining firmware, software, and/or hardware aspects. Furthermore, such aspects may take the form of a computer program product stored by one or more computer-readable storage media having computer-readable program code, or instructions, embodied in or on the storage media. Any suitable computer readable storage media may be utilized, including hard disks, CD-ROMs, optical storage devices, magnetic storage devices, and/or any combination thereof. In some examples, one or more computer readable media storing instructions may be used. The instructions, if executed, may cause one or more apparatuses to perform one or more acts described herein. The one or more computer readable media may comprise transitory and/or non-transitory media. In addition, various signals representing data or events as described herein may be transferred between a source and a destination in the form of electromagnetic waves traveling through signal-conducting media such as metal wires, optical fibers, and/or wireless transmission media (e.g., air and/or space).

Modifications may be made to the various examples described herein by those skilled in the art. For example, each of the elements of the aforementioned examples may be utilized alone or in combination or sub-combination with elements of the other examples. It will also be appreciated and understood that modifications may be made without departing from the true spirit and scope of the present disclosure. The description is thus to be regarded as illustrative instead of restrictive on the present disclosure.

Following are a list of clauses highlighting various aspects of the disclosure.

Clause 1. An apparatus, comprising: a continuous waveform generator; a frequency word generator, coupled to the continuous waveform generator; a reference sine wave generator, coupled to the continuous waveform generator and to the frequency word generator; a first digital to analog converter (DAC), coupled to the continuous waveform generator; a second DAC, coupled to the reference sine wave generator; and an I/Q modulator, coupled to the first DAC and to the second DAC.

Clause 2. The apparatus of clause 1, configured to: generate a modulated signal at a first frequency; and modify a frequency of the modulated signal to a second frequency, wherein the second frequency is different from the first frequency, while maintaining any of symbol timing and carrier phase.

Clause 3. The apparatus of clause 2, further configured to: receive, at a first input of the I/Q modulator, from the continuous waveform generator and via the first DAC, an analog baseband signal; receive, at a second input of the I/Q modulator, from the reference sine wave generator and via the second DAC, a reference signal; generate, at an output of the I/Q modulator, the modulated signal; and modify the frequency of the modulated signal by modifying a frequency of the reference signal.

Clause 4. The apparatus of any one of clauses 2-3, further configured to: generate, at the continuous waveform generator, a first synchronization signal towards the reference sine wave generator; generate, at the continuous waveform generator, a second synchronization signal towards the frequency word generator, wherein the second synchronization signal precedes the first synchronization signal; modify, at the frequency word generator and in response to receiving the second synchronization signal, a frequency word in accordance with the second frequency; and apply, at the reference sine wave generator and in response to receiving the first synchronization signal, the modified frequency word.

Clause 5. The apparatus of clause 4, further configured to generate the first synchronization signal in accordance with symbol timing of predefined symbols associated with the continuous waveform.

Clause 6. The apparatus of any one of clauses 4-5, wherein the reference sine wave generator comprises a numerically controlled oscillator (NCO), the apparatus further configured to: generate, at the reference sine wave generator, a digitally sampled reference signal using the NCO; and apply the modified frequency word by applying the modified frequency word to the NCO.

Clause 7. The apparatus of any one of clauses 1-6, wherein the continuous waveform, associated with the continuous waveform generator, corresponds to DVB-S2 (ETSI EN 302 307-1) or to DVB-S2 Extensions (ETSI EN 302 307-2).

Clause 8. An apparatus, comprising: a continuous waveform generator; a frequency word generator, coupled to the continuous waveform generator; a reference sine wave generator, coupled to the continuous waveform generator and to the frequency word generator; a digital I/Q modulator, coupled to the continuous waveform generator and to the reference sine wave generator; and a digital to analog converter (DAC), coupled to the digital I/Q modulator.

Clause 9. The apparatus of clause 8, configured to: generate a modulated signal at a first frequency; and modify a frequency of the modulated signal to a second frequency, wherein the second frequency is different from the first frequency, while maintaining symbol timing and carrier phase.

Clause 10. The apparatus of clause 9, further configured to: receive, at a first input of the digital I/Q modulator and from the continuous waveform generator, a digitally sampled baseband signal; receive, at a second input of the digital I/Q modulator and from the reference sine wave generator, a digitally sampled reference signal; generate, at an output of the digital I/Q modulator, a digitally sampled modulated signal; generate, at an output of the DAC and based on the digitally sampled modulated signal, the modulated signal; and modify the frequency of the modulated signal by modifying a frequency associated with the digitally sampled reference signal.

Clause 11. The apparatus of any one of clauses 9-10, further configured to: generate, at the continuous waveform generator, a first synchronization signal towards the reference sine wave generator; generate, at the continuous waveform generator, a second synchronization signal towards the frequency word generator, wherein the second synchronization signal precedes the first synchronization signal; modify, at the frequency word generator and in response to receiving the second synchronization signal, a frequency word in accordance with the second frequency; and apply, at the reference sine wave generator and in response to receiving the first synchronization signal, the modified frequency word.

Clause 12. The apparatus of clause 11, further configured to generate the first synchronization signal in accordance with symbol timing of predefined symbols associated with the continuous waveform.

Clause 13. The apparatus of any one of clauses 11-12, wherein the reference sine wave generator comprises a numerically controlled oscillator (NCO), the apparatus further configured to: generate, at the reference sine wave generator, the digitally sampled reference signal using the NCO; and apply the modified frequency word by applying the modified frequency word to the NCO.

Clause 14. The apparatus of any one of clauses 8-13, wherein the continuous waveform, associated with the continuous waveform generator, corresponds to DVB-S2 (ETSI EN 302 307-1) or to DVB-S2 Extensions (ETSI EN 302 307-2).

Clause 15. An apparatus, comprising: a continuous waveform demodulator; a frequency word generator, coupled to the continuous waveform demodulator; a reference sine wave generator, coupled to the continuous waveform demodulator and to the frequency word generator; a digital to analog converter (DAC), coupled to the reference sine wave generator; an I/Q demodulator, coupled to the DAC; and an analog to digital converter (ADC), coupled to the I/Q demodulator, wherein the continuous waveform demodulator is coupled to the ADC.

Clause 16. The apparatus of clause 15, wherein the I/Q demodulator is an analog I/Q demodulator.

Clause 17. The apparatus of any one of clauses 15-16, configured to: receive an analog signal; receive, on a first frequency, a first modulated signal included in the analog signal and corresponding to a continuous waveform; and modify a tuning to receive, on a second frequency different from the first frequency, a second modulated signal included in the analog signal and corresponding to the continuous waveform, while maintaining any of symbol timing and carrier phase.

Clause 18. The apparatus of clause 17, further configured to: receive, at a first input of the I/Q demodulator, the analog signal; receive, at a second input of the I/Q demodulator, from the reference sine wave generator and via the DAC, a reference signal; provide, at an output of the I/Q demodulator, a first I/Q baseband signal corresponding to the first modulated signal; modify a frequency of the reference signal while maintaining any of symbol timing and carrier phase; and provide, at the output of the I/Q demodulator, a second I/Q baseband signal corresponding to the second modulated signal.

Clause 19. The apparatus of any one of clauses 17-18, further configured to: generate, at the continuous waveform demodulator, a first synchronization signal towards the reference sine wave generator; generate, at the continuous waveform demodulator, a second synchronization signal towards the frequency word generator, wherein the second synchronization signal precedes the first synchronization signal; modify, at the frequency word generator and in response to receiving the second synchronization signal, a frequency word in accordance with the second frequency; and apply, at the reference sine wave generator and in response to receiving the first synchronization signal, the modified frequency word.

Clause 20. The apparatus of clause 19, further configured to generate the first synchronization signal in accordance with symbol timing of predefined symbols associated with the continuous waveform.

Clause 21. The apparatus of any one of clauses 19-20, wherein the reference sine wave generator comprises a numerically controlled oscillator (NCO), the apparatus further configured to: generate, at the reference sine wave generator, a digitally sampled reference signal using the NCO; and apply the modified frequency word by applying the modified frequency word to the NCO.

Clause 22. The apparatus of any one of clauses 15-21, wherein the continuous waveform, associated with the continuous waveform demodulator, corresponds to DVB-S2 (ETSI EN 302 307-1) or to DVB-S2 Extensions (ETSI EN 302 307-2).

Clause 23. An apparatus, comprising a continuous waveform demodulator; a frequency word generator, coupled to the continuous waveform demodulator; a reference sine wave generator, coupled to the continuous waveform demodulator and to the frequency word generator; an analog to digital converter (ADC); and a digital I/Q demodulator, coupled to the ADC and to the reference sine wave generator, wherein the continuous waveform demodulator is coupled to the digital I/Q demodulator.

Clause 24. The apparatus of clause 23, configured to: receive an analog signal; receive, on a first frequency, a first modulated signal included in the analog signal and corresponding to a continuous waveform; and modify a tuning to receive, on a second frequency different from the first frequency, a second modulated signal included in the analog signal and corresponding to the continuous waveform, while maintaining any of symbol timing and carrier phase.

Clause 25. The apparatus of clause 24, further configured to: generate a digitally sampled signal corresponding to the analog signal; receive, at a first input of the digital I/Q demodulator, the digitally sampled signal; receive, at a second input of the digital I/Q demodulator, from the reference sine wave generator, a digitally sampled reference signal; provide, at an output of the digital I/Q demodulator, a digitally sampled first I/Q baseband signal corresponding to the first modulated signal; modify a frequency associated with the digitally sampled reference signal while maintaining any of symbol timing and carrier phase; and provide, at the output of the digital I/Q demodulator, a second digitally sampled I/Q baseband signal corresponding to the second modulated signal.

Clause 26. The apparatus of any one of clauses 24-25, further configured to: generate, at the continuous waveform demodulator, a first synchronization signal towards the reference sine wave generator; generate, at the continuous waveform demodulator, a second synchronization signal towards the frequency word generator, wherein the second synchronization signal precedes the first synchronization signal; modify, at the frequency word generator and in response to receiving the second synchronization signal, a frequency word in accordance with the second frequency; and apply, at the reference sine wave generator and in response to receiving the first synchronization signal, the modified frequency word.

Clause 27. The apparatus of clause 26, further configured to generate the first synchronization signal in accordance with symbol timing of predefined symbols associated with the continuous waveform.

Clause 28. The apparatus of any one of clauses 26-27, wherein the reference sine wave generator comprises a numerically controlled oscillator (NCO), the apparatus further configured to: generate, at the reference sine wave generator, a digitally sampled reference signal using the NCO; and apply the modified frequency word by applying the modified frequency word to the NCO.

Clause 29. The apparatus of any one of clauses 23-28, wherein the continuous waveform, associated with the continuous waveform demodulator, corresponds to DVB-S2 (ETSI EN 302 307-1) or to DVB-S2 Extensions (ETSI EN 302 307-2).

## Claims

1. An apparatus, comprising:
a continuous waveform generator;
a frequency word generator, coupled to the continuous waveform generator;
a reference sine wave generator, coupled to the continuous waveform generator and to the frequency word generator;
a first digital to analog converter (DAC), coupled to the continuous waveform generator;
a second DAC, coupled to the reference sine wave generator; and
an I/Q modulator, coupled to the first DAC and to the second DAC.

2. The apparatus of claim 1, configured to:
receive, at a first input of the I/Q modulator, from the continuous waveform generator and via the first DAC, an analog baseband signal;
receive, at a second input of the I/Q modulator, from the reference sine wave generator and via the second DAC, a reference signal;
generate, at an output of the I/Q modulator, a modulated signal at a first frequency; and
modify a frequency of the reference signal to modify the frequency of the modulated signal to a second frequency different from the first frequency, while maintaining symbol timing and carrier phase.

3. The apparatus of any of claims 1-2, further configured to:
generate, at the continuous waveform generator, a first synchronization signal towards the reference sine wave generator;
generate, at the continuous waveform generator, a second synchronization signal towards the frequency word generator, wherein the second synchronization signal precedes the first synchronization signal;
generating, at the frequency word generator and in response to receiving the second synchronization signal, a modified frequency word in accordance with the second frequency; and
apply, at the reference sine wave generator and in response to receiving the first synchronization signal, the modified frequency word.

4. The apparatus of claim 3, further configured to generate the first synchronization signal in accordance with symbol timing of predefined symbols associated with a continuous waveform.

5. The apparatus of any of claims 3-4, wherein the reference sine wave generator comprises a numerically controlled oscillator (NCO), the apparatus further configured to:
generate, at the reference sine wave generator, a digitally sampled reference signal using the NCO; and
apply the modified frequency word by applying the modified frequency word to the NCO.

6. An apparatus, comprising:
a continuous waveform generator;
a frequency word generator, coupled to the continuous waveform generator;
a reference sine wave generator, coupled to the continuous waveform generator and to the frequency word generator;
a digital I/Q modulator, coupled to the continuous waveform generator and to the reference sine wave generator; and
a digital to analog converter (DAC), coupled to the digital I/Q modulator.

7. The apparatus of claim 6, configured to:
receive, at a first input of the digital I/Q modulator and from the continuous waveform generator, a digitally sampled baseband signal;
receive, at a second input of the digital I/Q modulator and from the reference sine wave generator, a digitally sampled reference signal;
generate, at an output of the digital I/Q modulator, a digitally sampled modulated signal;
generate, at an output of the DAC and based on the digitally sampled modulated signal, a modulated signal at a first frequency; and
modify a frequency associated with the digitally sampled reference signal to modify a frequency of the modulated signal to a second frequency different from the first frequency, while maintaining symbol timing and carrier phase.

8. The apparatus of any one of claims 6-7, further configured to:
generate, at the continuous waveform generator, a first synchronization signal towards the reference sine wave generator;
generate, at the continuous waveform generator, a second synchronization signal towards the frequency word generator, wherein the second synchronization signal precedes the first synchronization signal;
generating, at the frequency word generator and in response to receiving the second synchronization signal, a modified frequency word in accordance with the second frequency; and
apply, at the reference sine wave generator and in response to receiving the first synchronization signal, the modified frequency word.

9. The apparatus of claim 8, further configured to generate the first synchronization signal in accordance with symbol timing of predefined symbols associated with a continuous waveform.

10. The apparatus of claim any of claims 8-9, wherein the reference sine wave generator comprises a numerically controlled oscillator (NCO), the apparatus further configured to:
generate, at the reference sine wave generator, a digitally sampled reference signal using the NCO; and
apply the modified frequency word by applying the modified frequency word to the NCO.

11. An apparatus, comprising:
a continuous waveform demodulator;
a frequency word generator, coupled to the continuous waveform demodulator;
a reference sine wave generator, coupled to the continuous waveform demodulator and to the frequency word generator;
a digital to analog converter (DAC), coupled to the reference sine wave generator;
an I/Q demodulator, coupled to the DAC; and
an analog to digital converter (ADC), coupled to the I/Q demodulator, wherein the continuous waveform demodulator is coupled to the ADC.

12. The apparatus of claim 11, configured to:
receive an analog signal;
receive, on a first frequency, a first modulated signal included in the analog signal and corresponding to a continuous waveform; and
modify a tuning to receive, on a second frequency different from the first frequency, a second modulated signal included in the analog signal and corresponding to the continuous waveform, while maintaining any of symbol timing and carrier phase.

13. The apparatus of claim 12, further configured to:
generate, at the continuous waveform demodulator, a first synchronization signal towards the reference sine wave generator;
generate, at the continuous waveform demodulator, a second synchronization signal towards the frequency word generator, wherein the second synchronization signal precedes the first synchronization signal;
generate, at the frequency word generator and in response to receiving the second synchronization signal, a modified frequency word in accordance with the second frequency; and
apply, at the reference sine wave generator and in response to receiving the first synchronization signal, the modified frequency word.

14. An apparatus, comprising
a continuous waveform demodulator;
a frequency word generator, coupled to the continuous waveform demodulator;
a reference sine wave generator, coupled to the continuous waveform demodulator and to the frequency word generator;
an analog to digital converter (ADC); and
a digital I/Q demodulator, coupled to the ADC and to the reference sine wave generator, wherein the continuous waveform demodulator is coupled to the digital I/Q demodulator.

15. The apparatus of claim 14, configured to:
receive an analog signal;
receive, on a first frequency, a first modulated signal included in the analog signal and corresponding to a continuous waveform; and
modify a tuning to receive, on a second frequency different from the first frequency, a second modulated signal included in the analog signal and corresponding to the continuous waveform, while maintaining any of symbol timing and carrier phase.

16. The apparatus of claim 15, further configured to:
generate, at the continuous waveform demodulator, a first synchronization signal towards the reference sine wave generator;
generate, at the continuous waveform demodulator, a second synchronization signal towards the frequency word generator, wherein the second synchronization signal precedes the first synchronization signal;
generate, at the frequency word generator and in response to receiving the second synchronization signal, a modified frequency word in accordance with the second frequency; and apply, at the reference sine wave generator and in response to receiving the first synchronization signal, the modified frequency word.
